# EUROPÄISCHE PATENTSCHRIFT

(11) **EP 2 012 143 B1**
(45) Veröffentlichungstag und Bekanntmachung des Hinweises auf die Patenterteilung: **12.11.2014**
(21) Anmeldenummer: 07013163.6
(22) Anmeldetag: 05.07.2007
(51) Int. Cl.: G01R 33/022, G01V 3/10, G01V 3/15

(54) **Kompensationsverfahren für die Differenzspannungsabweichung bei unterschiedlicher Ausrichtung eines Sensorrohres von Magnetometern im Erdmagnetfeld und Magnetometer**
Compensation method for differential voltage deviations with varying alignment of a sensor rod of magnetometers in the earth's magnetic field and magnetometer
Procédé de compensation pour l'écart de tension différentiel en cas de variation de l'orientation d'un tuyau de capteur de magnétomètres dans un champ magnétique terrestre et magnétomètre

(43) Veröffentlichungstag der Anmeldung: 07.01.2009
(73) Patentinhaber: Vallon GmbH, 72800 Eningen (DE)
(72) Erfinder: Reinhardt, Horst, 72800 Eningen (DE)
(74) Vertreter: Klocke, Peter

(56) Entgegenhaltungen:
- EP-A- 0 590 349
- EP-A- 0 945 736
- DE-A1- 2 942 847
- DE-B1- 1 623 568
- US-A- 4 427 943

## Beschreibung

Die Erfindung betrifft ein Verfahren zur automatischen Kompensation von Differenzspannungsabweichungen von magnetischen Induktoren eines Magnetometers an einer Stelle des Erdmagnetfeldes bei unterschiedlicher Ausrichtung eines Sensorrohres diesem gegenüber, wie sie beispielsweise durch Pendeln eines Sensorrohres im Erdmagnetfeld entstehen, wobei das Magnetometer mindestens zwei in einem axialen Abstand zueinander angeordnete Induktoren aufweist, deren magnetische Achsen auf einer gedachten Geraden angeordnet sind, und wobei die Induktoren jeweils zwei oder mehr Spulenwickel aufweisen und jeweils erste Spulenwickel als Empfängerspulen und jeweils zweite oder weitere Spulenwickel als Erregerspulen wirken und die Empfängerspulen ein Differenzsignal erzeugen, das verstärkt und ausgewertet wird. Die Erfindung betrifft außerdem ein Magnetometer zur Anwendung des vorgeschlagenen Verfahrens.

Magnetometer sind allgemein bekannt und werden vorwiegend zur Ortung von Stahlteilen, wie zum Beispiel Bomben, Rohrleitungen, Kabelmuffen und dergleichen im Boden oder in Gewässern eingesetzt. Derartige ferromagnetische Körper stören das an sich homogene Erdmagnetfeld und bewirken abhängig von ihrer Größe eine messbare Veränderung der Homogenität des magnetischen Erdfeldes. Zur Ortung solcher Körper wird der Erdmagnetfeldgradient bestimmt, der ein Maß für die örtliche Änderung des Magnetfeldes darstellt. Die Ermittlung des Erdfeldgradienten erfolgt mit speziellen Magnetfeldsensoren, die als Magnetfelddifferenzsonden bekannt sind.

Magnetfelddifferenzsonden sind meist rohrförmig ausgebildet und weisen zwei oder mehr in einem stabilen Träger angeordnete magnetempfindliche Induktoren auf, die miteinander fluchtend in einem vorgegebenen axialen Basisabstand angeordnet und von einem umgebenden Sensorrohr geschützt sind. Die mindestens zwei Induktoren sind in Differenz so geschaltet, dass das weitgehend homogene magnetische Feld der Erde mindestens annähernd kompensiert ist. Ein in der Nähe des Feldstärke-Differenzmessers befindlicher ferromagnetischer Körper stört das ansonsten homogene magnetische Erdfeld. Durch den räumlichen Abstand der Induktoren werden von den mindestens zwei Induktoren unterschiedliche magnetische Feldstärken gemessen, so dass ein Differenzsignal ermittelt werden kann.

Solche Magnetometersonden sind sehr empfindlich und können Differenzfeldstärken im Nano-Tesla-Bereich auflösen, so dass störende ferromagnetische Körper in Abhängigkeit von der Größe und dem magnetischen Zustand in großen Tiefen nachgewiesen werden können. Wesentliche Voraussetzung für eine hohe Detektionsempfindlichkeit gegenüber Inhomogenitäten des magnetischen Erdfeldes ist die sogenannte Parallelisierung sowie der elektrische Abgleich der Induktoren. Insbesondere die mechanische Parallelisierung der Induktoren in dem vom Sensorrohr umgebenen Träger muss hochgenau erfolgen. Dabei müssen die Induktoren bis auf wenige hundertstel Grad exakt zueinander parallel ausgerichtet werden. Aus dem Stand der Technik sind fest fixierbare sowie einstellbare Parallelisierungseinrichtungen bekannt. Beispielhaft wird auf die Schriften DE 29 42 847 C2 und EP 1 312 934 A2 verwiesen.

Geringe geometrische und/oder elektrische Abweichungen der Induktoren voneinander oder Einflüsse durch ferromagnetische Einwirkungen von Geräteteilen des Magnetometers bewirken bei unterschiedlichen Ausrichtungen des Sensorrohrs im Erdmagnetfeld eine Anzeigedifferenz des Magnetometers. Solche Anzeigedifferenzen können durch einen manuellen Sondenabgleich weitgehend ausgeglichen werden. Dieser kann mit magnetischen Abgleichstücken erfolgen, die an mit einem hohen Zeitaufwand zu bestimmenden Stellen des Sensorrohres angebracht werden müssen oder durch Abgleich der Differenzspannung der Induktoren, also durch eine elektrische Symmetrisierung der Empfängerspulen. Eine solche elektrische Symmetrisierung ist beispielsweise aus der Patentschrift EP 0 945 736 B1 bekannt. Dort erfolgt der Abgleich mittels einem einstellbaren ohmschen Widerstand, der eine Messbrücke mit den Empfangsspulen symmetrisiert.

Sensorrohre von Magnetometer sind in der Regel mit einem Ende an einem Tragegestell beweglich befestigt, so dass sich deren Achse aufgrund der Schwerkraft selbstständig zum Erdmittelpunkt hin ausrichtet. Die magnetischen Feldlinien des homogenen Erdfeldes bilden mit der Achse des Sensorrohres einen im Wesentlichen vom geografischen Standort abhängigen Winkel. Dabei ist die von den Empfängerspulen ermittelte Differenzspannung von der Ausrichtung der magnetischen Achsen der Induktoren bezüglich den magnetischen Feldlinien der Erde abhängig. Veränderungen der Ausrichtung des Sensorrohres im Erdmagnetfeld, beispielsweise durch Pendeln des Sensorrohres während der Suche nach Störkörpern, bewirken eine Veränderung der Differenzspannung und führen zu unerwünschten Differenzspannungsabweichungen, die durch manuellen elektrischen Abgleich der Empfängerspulen nur bedingt kompensiert werden können.

Der vorliegenden Erfindung liegt die Aufgabe zugrunde, diese manuelle Einstellung automatisch vorzunehmen und während des Betriebs einen ständigen Abgleich zu ermöglichen.

Diese Aufgabe wird erfindungsgemäß durch ein Verfahren zur automatischen Kompensation von Differenzspannungsabweichungen bei unterschiedlichen Ausrichtungen des Sensorrohrs im Erdmagnetfeld mit den Merkmalen des Anspruchs 1 sowie durch ein Magnetometer mit den Merkmalen des nebengeordneten Anspruch 6 gelöst. Weitere vorteilhafte Ausgestaltungen sind den rückbezogenen Unteransprüchen zu entnehmen.

Das erfindungsgemäße Verfahren dient zur automatischen Kompensation von Differenzspannungsabweichungen bei unterschiedlichen Ausrichtungen des Sensorrohrs von Magnetometern im Erdmagnetfeld, wobei das Magnetometer mindestens zwei in einem axialen Abstand zueinander angeordnete Induktoren aufweist, deren magnetische Achsen auf einer gedachten Geraden angeordnet sind, und wobei die Induktoren jeweils zwei oder mehr Spulenwickel aufweisen. Jeweils erste Spulenwickel der Induktoren wirken als Empfängerspulen und jeweils zweite oder weitere Spulenwickel als Erregerspulen. Zur Bestimmung der Differenzspannungsabweichungen der Induktoren werden temporäre elektrisch veränderbare Hilfsmagnetfelder verwendet, die externen Gleichfeldänderungen entsprechen. Die Hilfsmagnetfelder werden mit einem als Erregerspule wirkenden Spulenwickel der beiden Induktoren erzeugt.

Dazu werden unterschiedliche künstliche magnetische Hilfsfelder dem einwirkenden, homogenen oder inhomogenen Erdmagnetfeld überlagert und eine dabei messbare magnetische Feldstärkendifferenz von den Empfängerspulen ermittelt. Zur Feststellung der Signaldifferenz der Induktoren wird das Hilfsmagnetfeld vorzugsweise in Richtung und Stärke verändert und der Einfluss auf die Differenzspannung der Empfängerspulen festgestellt, wobei das Differenzsignal verstärkt ausgewertet wird.

Vorteilhafterweise wird für die Erzeugung und Variation der Hilfsmagnetfelder durch die jeweiligen erregenden Spulenwickel ein zeitlich versetzter Spulenstrom unterschiedlicher Polarität und/oder Stärke geleitet. Der Spulenstrom wird der/den Erregerspule(n) von einer regelbaren Stromquelle bzw. Spannungsquelle zugeführt, die von einer automatischen Steuereinrichtung gesteuert wird, die auch die damit verbundenen Änderungen der Differenzspannung an den Empfängerspulen feststellt und elektrisch kompensiert.

Die Ermittlung und die Kompensation der Empfangssignalunterschiede wird automatisch gesteuert. Erfindungsgemäß erfolgt die automatische Kompensation von Differenzspannungsabweichungen der magnetischen Induktoren des Magnetometers, an einer Stelle des Erdmagnetfeldes bei unterschiedlicher Ausrichtung eines Sensorrohres diesem gegenüber, bei der zuerst die Abweichung ermittelt und anschließend elektrisch kompensiert wird, mit folgenden Schritten:
- Leiten eines veränderlichen Spulenstromes durch eine Erregerspule der mindestens zwei Induktoren eines Magnetometers;
- Erzeugen eines Hilfsmagnetfeldes mittels der Erregerspule(n);
- Übertragung des Hilfsmagnetfeldes auf die Empfängerspulen;
- Variation von Polarität und/oder Stromstärke des Spulenstroms durch die Erregerspule(n) und Detektion der Änderungen der erzeugten Differenzspannung an den Empfängerspulen;
- Feststellen der Unsymmetrie der ermittelten Differenzspannungen; und
- elektronisches Nachstellen der Differenzspannung bis nur noch ein minimaler Einfluss bei der Variation des Hilfsmagnetfeldes feststellbar ist.

Dabei wird durch elektronische Schaltkreise die Auswirkung der einzelnen magnetischen Hilfsmagnetfelder von der automatischen Steuereinrichtung ermittelt und die Differenzspannung der Empfängerspulen, dem Messeffekt entsprechend elektronisch nachgestellt, bevor sie zur Anzeige gelangt.

Vorzugsweise erfolgt die Ermittlung und Kompensierung der Differenzspannungsabweichung fortlaufend in bestimmten, vorzugsweise regelmäßigen zeitlichen Abständen. Nach jeder Ermittlung wird die Differenzspannung neu kompensiert. Dies hat den weiteren Vorteil, dass von thermischen Effekten herrührende Änderungen der Differenzspannung der Induktoren im Betrieb ebenfalls erkannt und ausgeglichen werden, so dass entsprechende Messwertabweichungen ausgeschlossen sind.

Gemäß der Erfindung weist das erfindungsgemäße Magnetometer zur Anwendung des vorstehend beschriebenen Verfahrens eine Steuereinrichtung auf, die mit einem Differenzverstärker und einer regelbaren Stromquelle verbunden ist. Der Differenzverstärker erhält ein Differenzsignal von den magnetischen Induktoren, das die Steuereinrichtung verstärkt ausgewertet. Die regelbare Stromquelle dient zum Aufbau eines künstlichen temporären Hilfsmagnetfeldes mittels entsprechender Spulenwickel der Induktoren. Das Hilfsmagnetfeld kann zusätzlich zu einem pulsierenden Hauptmagnetfeld verwendet werden, mit dem die Empfängerspulen üblicherweise dauerhaft erregt werden.

Die automatische Steuereinrichtung steuert den Ablauf für die Ermittlung der Differenzspannungsabweichung des Empfangssignals von mindestens zwei Induktoren des Magnetometers, wobei die Induktoren jeweils zwei oder mehr Spulenwickel aufweisen, die als Erregerspulen bzw. Empfängerspulen wirken. Die regelbare Stromquelle ist mit einer Erregerspule der Induktoren verbunden, wobei die Polarität und/oder die Stärke des Spulenstromes zur Ausbildung des temporären Hilfsmagnetfeldes von der Steuereinrichtung variiert wird. Die Steuereinrichtung stellt bei der Variation des Hilfsmagnetfeldes eine Unsymmetrie der von dem Hilfsmagnetfeld beeinflussten Differenzspannung fest und stellt entsprechend die Differenzspannung der Empfängerspulen der Induktoren zur elektrischen Symmetrisierung automatisch nach.

Nachfolgend wird die Erfindung anhand von zwei in der Zeichnung schematisch dargestellten Ausführungsbeispielen näher erläutert. Weitere Merkmale der Erfindung ergeben sich aus der folgenden Beschreibung der Ausführungsbeispiele in Verbindung mit den Ansprüchen. Es zeigen:
- Figur 1: ein Blockschaltbild eines ersten erfindungsgemäßen Magnetometers mit zwei Induktoren und jeweils drei Spulenwickel pro Induktor; und
- Figur 2: ein Blockschaltbild eines zweiten erfindungsgemäßen Magnetometers mit zwei Induktoren und je zwei Spulenwickeln pro Induktor.

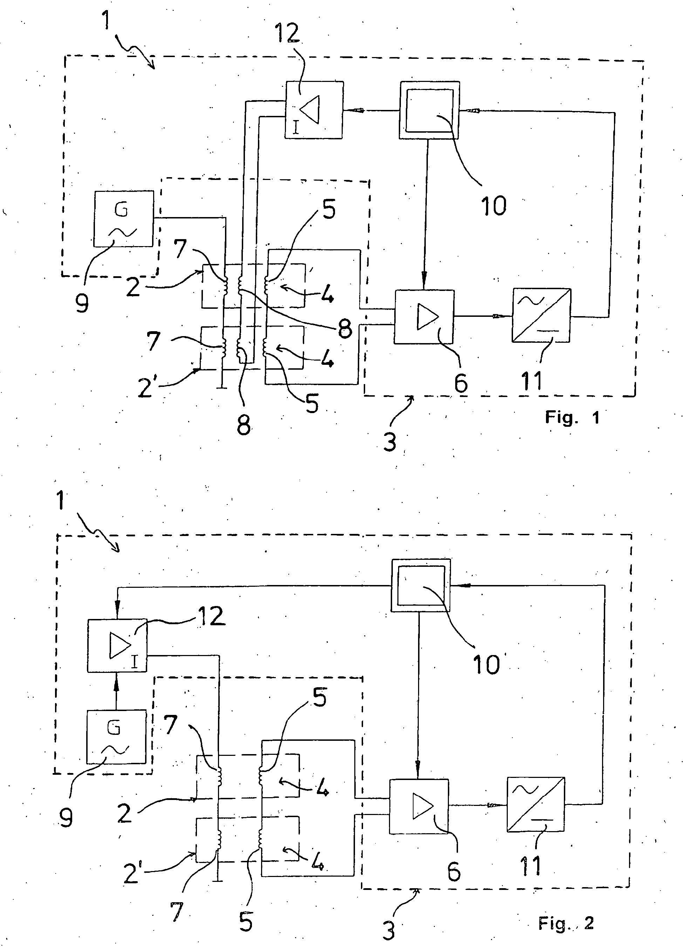

Die Figuren 1, 2 zeigen unterschiedliche Ausführungsbeispiele eines erfindungsgemäßen Magnetometers 1. Die Magnetometer 1 weisen je zwei Induktoren 2, 2' und eine Auswertelektronik 3 auf. In den Induktoren 2, 2' sind jeweils eine Anzahl von Spulenwickeln 4 angeordnet, deren magnetische Achsen parallel zueinander ausgerichtet sind. Die Induktoren 2, 2' sind auf einer gedachten Geraden angeordnet und weisen einen axialen Basisabstand zueinander auf. Sie sind identisch aufgebaut, wobei je ein erster der Spulenwickel 4 eine Empfängerspule 5 bildet und die verbleibenden Spulenwickel 4 als Erregerspulen 7 dienen. Die Empfängerspulen 5 der Induktoren 2, 2' sind gegensinnig in Reihe geschaltet und mit einem Differenzverstärker 6 der Auswerteelektronik 3 verbunden. Einander zugeordnete Erregerspulen 7 der Induktoren 2, 2' sind gleichsinnig in Reihe geschaltet.

Figur 2 zeigt Induktoren 2, 2' mit je zwei Spulenwickeln 4. Dabei sind die Empfängerspulen 5 von jeweils ersten Spulenwickeln 4 und die Erregerspulen 7 von jeweils zweiten Spulenwickeln 4 gebildet. Die Erregerspulen 7 werden gemeinsam für den Aufbau des Haupt- und des Hilfsmagnetfeldes verwendet, das zu den Empfängerspulen 5 übertragen wird. Dem gegenüber weisen die in Figur 1 dargestellten Induktoren 2, 2' jeweils noch einen dritten Spulenwickel 4 auf, die als Erregerspulen 8 wirken, und wie die Erregerspulen 7 gleichsinnig in Reihe geschaltet sind. Die Erregerspulen 7 sind für die Erzeugung des Hauptmagnetfeldes und die Erregerspulen 8 für die Erzeugung des Hilfsmagnetfeldes vorgesehen.

Die Erregerspulen 7 werden von einem Schwingungsgenerator 9 erregt, wobei das in ihnen erzeugte pulsierende Hauptmagnetfeld auf die Empfängerspulen 5 übertragen wird. Zur Ansteuerung der Induktoren 2, 2' ist eine Steuereinrichtung 10 in Form eines Mikrocontrollers vorgesehen, der mit dem Differenzverstärker 6 und einem daran anschließenden Umformer 11 verbunden ist.

Der Mikrocontroller 10 steuert außerdem den Ablauf für die Ermittlung und die Kompensation der von der Ausrichtung des Sensorrohres gegenüber dem Erdmagnetfeld jeweils abhängigen Differenzspannungsabweichung der Induktoren 2, 2'. Zur Ermittlung der Signalunterschiede der Empfängerspulen 5 wird das temporäre, zeitlich veränderliche Hilfsmagnetfeld verwendet, dass in dem in der Figur 1 dargestellten Ausführungsbeispiel über die Erregerspulen 8 und in dem in der Figur 2 dargestellten Ausführungsbeispiel über die Erregerspulen 7 aufgebaut und an die Empfängerspulen 5 übertragen wird. Zum Aufbau des Hilfsmagnetfeldes ist für die Versorgung der jeweiligen Erregerspulen 8 bzw. 7 mit einem zeitlich versetzten Spulenstrom unterschiedlicher Polarität und/oder Stärke eine regelbare Stromquelle 12 vorgesehen, die von dem Mikrocontroller 10 gesteuert ist. Der Mikrocontroller 10 stellt auch den Einfluss des künstlichen Hilfsmagnetfeldes auf die Differenzspannung der Empfängerspulen 5 fest und stellt die Differenzspannung am Ausgang des Differenzverstärkers 6 automatisch elektronisch nach, bis nur noch ein minimaler Einfluss bei der Variation des Hilfsmagnetfeldes feststellbar ist.

## Patentansprüche

1. Verfahren zur automatischen Kompensation von Differenzspannungsabweichungen von magnetischen Induktoren (2, 2') eines Magnetometers (1) an einer Stelle des Erdmagnetfeldes bei unterschiedlicher Ausrichtung eines Sensorrohres diesem gegenüber, wobei das Magnetometer (1) mindestens zwei in einem axialen Abstand zueinander angeordnete Induktoren (2, 2') aufweist, deren magnetische Achsen auf einer gedachten Geraden angeordnet sind, und wobei die Induktoren (2, 2') jeweils zwei oder mehr Spulenwickeln (4) aufweisen und jeweils erste Spulenwickel (4) als Empfängerspulen (5) und jeweils zweite Spulenwickel (4) als Erregerspulen (7) wirken und die Empfängerspulen (5) ein Differenzsignal erzeugen, das verstärkt und ausgewertet wird, **dadurch gekennzeichnet, dass** zur Bestimmung der Differenzspannungsabweichung der Empfängerspulen (5) der Induktoren (2, 2') temporäre elektrisch veränderbare Hilfsmagnetfelder verwendet werden, die externen Gleichfeldänderungen entsprechen, wobei die Hilfsmagnetfelder mit einem Spulenwickel (4) der Induktoren (2, 2') erzeugt werden.

2. Verfahren nach Anspruch 1, **dadurch gekennzeichnet, dass** zur Erzeugung der Hilfsmagnetfelder durch den jeweiligen erregenden Spulenwickel (4) ein zeitlich versetzter Spulenstrom unterschiedlicher Polarität und/oder Stärke geleitet wird.

3. Verfahren nach Anspruch 1 oder 2, **dadurch gekennzeichnet, dass** die Ermittlung und die Kompensation der Differenzspannungsabweichung automatisch gesteuert wird.

4. Verfahren nach einem der vorangegangenen Ansprüche, gekenntzeichnet durch die folgenden Schritte:
- Leiten eines veränderlichen Spulenstroms durch eine Erregerspule (7, 8) der mindestens zwei Induktoren (2, 2') eines Magnetometers (1);
- Erzeugen eines Hilfsmagnetfeldes mittels der Erregerspule(n) (7, 8);
- Übertragen des Hilfsmagnetfeldes auf die Empfängerspulen (5);
- Variation von Polarität und/oder Stärke des Spulenstromes durch die Erregerspule(n) (7, 8) und Detektion der Änderungen der erzeugten Differenzspannungen an den Empfängerspülen (5);
- Feststellen der Unsymmetrie des Einflusses des Hilfsmagnetfeldes auf die Differenzspannung; und
- Elektronisches Nachstellen der Differenzspannung, bis nur noch ein minimaler Einfluss bei der Variation des Hilfsmagnetfeldes feststellbar ist.

5. Verfahren nach einem der vorangegangenen Ansprüche, **dadurch gekennzeichnet, dass** die Differenzspannungsabweichung fortlaufend in bestimmten, vorzugsweise regelmäßigen zeitlichen Abständen ermittelt und neu kompensiert wird.

6. Magnetometer zur Anwendung des Verfahrens nach einem der vorangegangenen Ansprüche 1-5, mit mindestens zwei in einem axialen Abstand zueinander angeordneten Induktoren (2, 2') deren magnetische Achsen auf einer gedachten Geraden angeordnet sind, wobei die Induktoren (2, 2') jeweils zwei oder mehr Spulenwickel (4) aufweisen, und wobei erste Spulenwickel (4) als Empfängerspulen (5) und jeweils zweite Spulenwickel (4) als Erregerspulen (7) wirken, und die Empfängerspulen (5) ein Differenzsignal erzeugen, dass verstärkt auswertbar ist, **gekennzeichnet durch** eine Steuereinrichtung (10), die mit einem Differenzverstärker (6) und einer regelbaren Stromquelle (12) verbunden ist, und die für die Ermittlung einer Differenzsignalabweichung bei einer unterschiedlicher. Ausrichtung des Sensorrohres des Magnetometers (1) im Erdmagnetfeld die Polarität und/oder die Stärke eines Spulenstromes durch eine Erregerspule (7, 8) der Induktoren (2, 2') variiert und den Einfluss des Hilfsmagnetfeldes auf die Differenzspannung der Empfängerspulen (5) feststellt und die Differenzspannung der Empfängerspulen (5) der Induktoren (2, 2') zur elektrischen Symmetrisierung der Empfängerspulen (5) elektronisch nachstellt.

## Claims

1. Method for the automatic compensation of differential voltage deviations of magnetic inductors (2, 2') of a magnetometer (1) at a point in the earth's magnetic field, at varying orientations of a sensor rod with respect to said magnetic field, the magnetometer (1) having at least two inductors (2, 2') arranged at an axial distance from each other, the magnetic axes thereof being arranged on an imaginary straight line, the inductors (2, 2') each having two or more coil windings (4), and respective first coil windings (4) acting as receiver coils (5) and respective second coil windings (4) acting as exciter coils (7), and the receiver coils (5) generating a differential signal which is amplified and evaluated, **characterised in that** temporary electrically changeable auxiliary magnetic fields which correspond to external DC field changes are used to determine the differential voltage deviation of the receiver coils (5) of the inductors (2, 2'), the auxiliary magnetic fields being generated by a coil winding (4) of the inductors (2, 2').

2. Method according to claim 1, **characterised in that**, in order to generate the auxiliary magnetic fields through the respective activating coil winding (4), a temporally offset coil current of varying polarity and/or strength is transmitted.

3. Method according to claim 1 or claim 2, **characterised in that** the determining and compensating of the differential voltage deviation is controlled automatically.

4. Method according to any of the preceding claims, **characterised by** the following steps:
- transmitting a variable coil current through an exciter coil (7, 8) of the at least two inductors (2, 2') of a magnetometer (1);
- generating an auxiliary magnetic field by means of the exciter coil(s) (7, 8);
- transferring the auxiliary magnetic field to the receiver coils (5);
- varying the polarity and/or strength of the coil current through the exciter coil(s) (7, 8) and detecting the changes in the differential voltages generated on the receiver coils (5);
- determining the imbalance of the influence of the auxiliary magnetic field on the differential voltage; and
- electronically regulating the differential voltage until only a minimal influence in the variation of the auxiliary magnetic field is still detectable.

5. Method according to any of the preceding claims, **characterised in that** the differential voltage deviation is continuously identified and re-compensated at predetermined, preferably regular, time intervals.

6. Magnetometer for use in the method according to any of the preceding claims 1-5 having at least two inductors (2, 2') arranged at an axial distance from each other, the magnetic axes thereof being arranged on an imaginary straight line, the inductors (2, 2') each having two or more coil windings (4), and the first coil windings (4) acting as receiver coils (5) and respective second coil windings (4) acting as exciter coils (7), and the receiver coils (5) generating a differential signal which can be evaluated amplified, **characterised by** a control device (10) which is connected to a differential amplifier (6) and an adjustable power source (12) and which varies the polarity and/or strength of a coil current through an exciter coil (7, 8) of the inductors (2, 2') in order to determine a differential signal deviation at varying orientations of the sensor rod of the magnetometer (1) in the earth's magnetic field, and determine the influence of the auxiliary magnetic field on the differential voltage of the receiver coils (5) and electronically regulate the differential voltage of the receiver coils (5) of the inductors (2, 2') for electrically symmetrising the receiver coils (5).

## Revendications

1. Procédé de compensation automatique d'écarts de tension différentielle d'inducteurs magnétiques (2, 2') d'un magnétomètre (1) en un point du champ magnétique terrestre en cas d'orientation différente d'un tube de capteur par rapport à celui-ci, le magnétomètre (1) comportant au moins deux inducteurs (2, 2') disposés à une distance axiale l'un de l'autre, dont les axes magnétiques sont disposés sur une droite imaginaire, les inducteurs (2, 2') présentant chacun deux ou plusieurs enroulements de bobine (4), des premiers enroulements de bobine (4) agissant chaque fois comme bobines réceptrices (5) et des deuxièmes enroulements de bobine (4) chaque fois comme bobines excitatrices (7), et les bobines réceptrices (5) générant un signal différentiel qui est amplifié et évalué, **caractérisé en ce que** pour déterminer l'écart de tension différentielle des bobines réceptrices (5) des inducteurs (2, 2'), on utilise des champs magnétiques auxiliaires temporaires variables électriquement qui correspondent à des variations externes de champ continu, les champs magnétiques auxiliaires étant générés avec un enroulement de bobine (4) des inducteurs (2, 2').

2. Procédé selon la revendication 1, **caractérisé en ce que** pour générer les champs magnétiques auxiliaires, on fait passer un courant de bobine décalé dans le temps, de polarité et/ou d'intensité différente, à travers l'enroulement de bobine excitateur respectif (4).

3. Procédé selon la revendication 1 ou 2, **caractérisé en ce que** la détermination et la compensation de l'écart de tension différentielle sont commandées automatiquement.

4. Procédé selon l'une des revendications précédentes, **caractérisé par** les étapes suivantes consistant à :
- faire passer un courant de bobine variable à travers une bobine excitatrice (7, 8) desdits au moins deux inducteurs (2, 2') d'un magnétomètre (1) ;
- générer un champ magnétique auxiliaire au moyen de la ou des bobine(s) excitatrice(s) (7, 8) ;
- transmettre le champ magnétique auxiliaire aux bobines réceptrices (5) ;
- faire varier la polarité et/ou l'intensité du courant de bobine à travers la ou les bobine(s) excitatrice(s) (7, 8) et détecter les variations des tensions différentielles générées aux bobines réceptrices (5) ;
- constater l'asymétrie de l'influence du champ magnétique auxiliaire sur la tension différentielle ; et
- ajuster électroniquement la tension différentielle jusqu'à ce que seulement une influence minimale soit encore détectable lors de la variation du champ magnétique auxiliaire.

5. Procédé selon l'une des revendications précédentes, **caractérisé en ce que** l'écart de tension différentielle est déterminé et compensé de façon continue à des intervalles de temps définis, de préférence réguliers.

6. Magnétomètre permettant d'appliquer le procédé selon l'une des revendications précédentes 1 à 5, avec au moins deux inducteurs (2, 2') disposés à une distance axiale l'un de l'autre, dont les axes magnétiques sont disposés sur une droite imaginaire, les inducteurs (2, 2') présentant chacun deux ou plusieurs enroulements de bobine (4), des premiers enroulements de bobine (4) agissant comme bobines réceptrices (5) et des deuxièmes enroulements de bobine (4) comme bobines excitatrices (7), et les bobines réceptrices (5) générant un signal différentiel qui est amplifié et évaluable, **caractérisé par** un dispositif de commande (10) qui est relié à un amplificateur différentiel (6) et à une source de courant réglable (12), et qui, pour déterminer un écart de signal différentiel en cas d'orientation différente du tube de capteur du magnétomètre (1) dans le champ magnétique terrestre, fait varier la polarité et/ou l'intensité d'un courant de bobine à travers une bobine excitatrice (7, 8) des inducteurs (2, 2'), constate l'influence du champ magnétique auxiliaire sur la tension différentielle des bobines réceptrices (5) et ajuste électroniquement la tension différentielle des bobines réceptrices (5) des inducteurs (2, 2') pour assurer la symétrie électrique des bobines réceptrices (5).
